Europäisches Patentamt

European Patent Office

Office européen des brevets

(19)

(11) EP 0 755 807 B1

(12) **FASCICULE DE BREVET EUROPEEN**

(45) Date de publication et mention
de la délivrance du brevet:
**22.03.2000 Bulletin 2000/12**

(51) Int Cl.⁷: **B60B 3/04**, B60C 29/02

(21) Numéro de dépôt: **96110813.1**

(22) Date de dépôt: **04.07.1996**

(54) **Roue de véhicule utilitaire à valve débouchant à l'extérieur du disque**

Rad für Nutzfahrzeuge mit aussenliegendem Ventil

Commercial vehicle wheel with valve, which opens outside the disk

(84) Etats contractants désignés:
**DE ES FR GB IT**

(30) Priorité: **25.07.1995 FR 9509272**
**29.01.1996 FR 9601203**

(43) Date de publication de la demande:
**29.01.1997 Bulletin 1997/05**

(73) Titulaire: **COMPAGNIE GENERALE DES
ETABLISSEMENTS MICHELIN - MICHELIN & CIE
63040 Clermont-Ferrand Cédex (FR)**

(72) Inventeur: **Renard, Etienne**
**63200 Riom (FR)**

(74) Mandataire: **Bauvir, Jacques
Michelin & Cie,
Service SGD/LG/PI Ladoux
63040 Clermont-Ferrand Cedex 01 (FR)**

(56) Documents cités:
**EP-A- 0 067 247          EP-A- 0 701 911
DE-A- 4 014 480          DE-U- 29 506 449
FR-A- 2 314 838**

EP 0 755 807 B1

**Description**

L'invention concerne les roues en tôle de véhicules utilitaires équipées de valves pour le gonflage des pneumatiques, en particulier celles équipées de jantes à gorge circonférentielle de montage dont le trou de valve est situé dans le fond ou dans le flanc de gorge.

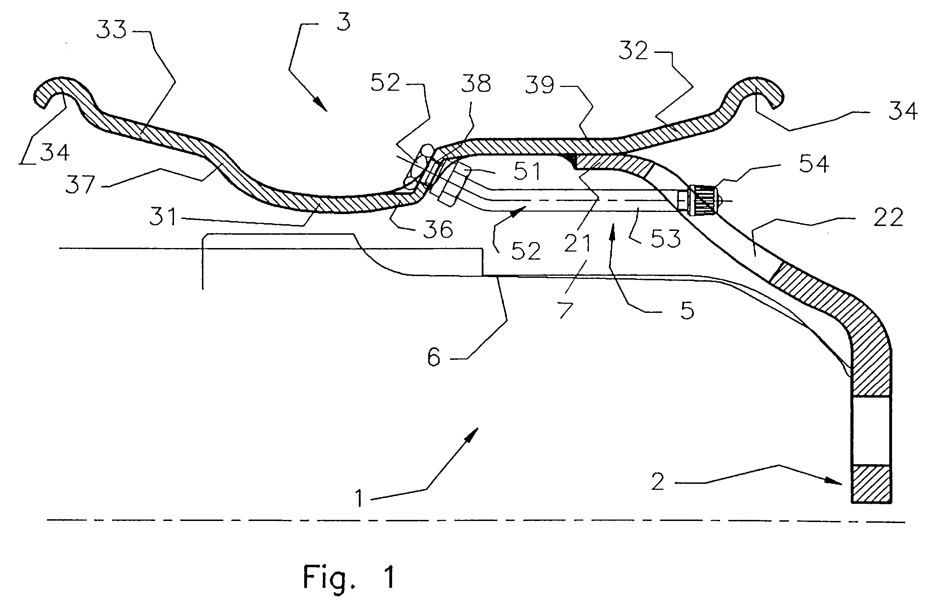

Les roues de ce type, un exemple est présenté à la figure 1, sont généralement réalisées par soudage d'un disque et d'une jante, la zone de liaison étant préférentiellement disposée entre l'un des sièges de bourrelet et le flanc de gorge correspondant. De telles roues sont équipées d'une valve dont la tige longe sensiblement la paroi radialement intérieure de la jante (opposée à la cavité pneumatique), pour aboutir du côté extérieur au véhicule en traversant le disque de roue par un ajour, de façon à rendre accessibles l'embout fileté et son chapeau. Ce faisant, la tige de valve représente une protubérance dans le volume situé entre la jante et l'essieu, volume où sont logés le moyeu et les organes de freinage.

On observe parfois des dégonflements intempestifs des pneumatiques, dus à des bris de valve. Des tests de roulage effectués avec des roues équipées de pneumatiques sans chambre à air et montées sur des véhicules roulant sur des pistes empierrées, montrent la possibilité de pénétration de corps étrangers - tels des pierres - dans les cavités entre la jante, le moyeu et les organes de freinage. Avec des essieux munis de freins à disques, on remarque la possibilité de passage, entre le fond de la jante et le disque de frein, de corps étrangers qui se trouvent entraînés en rotation dans ces cavités, et peuvent se trouver coincés entre des pièces y faisant saillie : en particulier entre la tige de valve qui tourne avec la roue et l'étrier de frein qui est fixe, ou entre celui-ci et la jante, du fait de l'irrégularité des formes des objets entraînés tournant sur eux-mêmes. Le passage de corps étrangers dans ces cavités est facilité par l'espace libre entre la jante et le disque de frein. On observe alors des chocs mécaniques causés par ces corps étrangers coincés entre des pièces mobiles et fixes. Ces chocs peuvent être assez graves pour casser des pièces métalliques comme les tiges de valve ou endommager la jante ou les pièces constituant l'étrier de frein, et le système de freinage en général. Cela conduit à des situations critiques, que ce soit par défaut de freinage ou par mise à plat brutale, en plus des problèmes de maintenance.

Une première solution à ce problème est présentée par la demande de brevet FR9412263 qui divulgue un dispositif de protection de la valve enveloppant radialement, au moins partiellement, la surface de révolution engendrée par la rotation de la valve autour de l'axe de la roue.

Mais, ce dispositif efficace nécessite de rajouter un élément aux ensembles roues/valves/pneumatiques ce qui accroît les coûts d'équipement et de maintenance des véhicules.

Un autre solution consiste à disposer le trou de valve de telle sorte que, la tige de valve soit placée en-dehors de la cavité définie par la jante, le disque de roue et les organes de freinage. C'est-à-dire que le trou de valve débouche axialement à l'extérieur du disque de roue. De telles dispositions pour le trou de valve sont classiques pour des roues tourisme ou pour certaines roues moulées en alliage pour véhicules utilitaires. La demande EP-A-0 701 911 qui est à considérer comme état de la technique au sens de l'Article 54(3) CBE, décrit une telle roue en tôle pour un véhicule utilitaire.

Cependant la demanderesse a constaté que l'adaptation aux roues en tôle pour véhicules utilitaires de la solution précédente peut entraîner une dégradation considérable de la résistance à la fatigue des roues obtenues.

On entend par roues de véhicules utilitaires, les roues de diamètre supérieur ou égal à 17,5 pouces (444,5 mm). Pour ces roues en effet, les contraintes d'utilisation imposent de renoncer aux profils classiques des roues tourisme.

L'invention a pour objet une roue de résistance à la fatigue satisfaisante.

Une telle roue pour véhicule utilitaire, en tôle et en une seule pièce, comprenant un disque, une jante avec une gorge de montage circonférentielle entre deux sièges prévus pour le bourrelet d'un pneumatique et deux rebords, la liaison entre ledit disque et ladite jante étant réalisée dans une zone de liaison disposée entre le flanc de la gorge et l'extrémité du siège situés axialement du côté du disque, et une valve traversant ladite jante par un trou de valve, ledit trou de valve étant situé axialement entre ladite zone de liaison et ladite extrémité du siège situé du côté du disque, caractérisée en ce que, $\Phi_g$ étant le diamètre de la surface radialement intérieure de ladite gorge de montage, $\Phi_c$ étant le diamètre de la surface radialement intérieure de la zone de liaison disque/jante, diamètre pris axialement à l'extrémité du disque de roue, et $\Phi_s$ étant le diamètre de la surface radialement intérieure des sièges de bourrelet, diamètre pris axialement à une distance $P_{min}$ des plans de référence P de la largeur de ladite jante, lesdits plans P étant deux plans perpendiculaires à l'axe de la roue passant chacun par l'intersection entre les prolongements, du côté radialement extérieur de la jante, d'un siège de bourrelet et du rebord adjacent, la distance axiale entre lesdits plans P correspondant à la largeur de ladite jante et la distance $P_{min}$ étant la largeur axiale desdits sièges de bourrelets de ladite jante, le rapport

$$R = \frac{\Phi_c - \Phi_g}{\Phi_s - \Phi_g}$$

doit être supérieur ou égal à 0,65.

Avantageusement, ce rapport R peut être supérieur ou égal à 0,75.

La zone d'accrochage peut être préférentiellement cylindrique, ce qui facilite la réalisation pratique de la liaison.

Plusieurs modes de réalisation de l'invention sont maintenant décrits, à titre non limitatif, avec l'aide des dessins annexés suivants :

- la figure 1 présente une coupe axiale passant par le trou de valve d'une roue classique ;
- la figure 2 est une coupe similaire d'un mode de réalisation d'une roue à valve extérieure au disque, non satisfaisant ;
- la figure 3 est une coupe similaire d'un premier mode de réalisation d'une roue correspondant à l'invention ;
- la figure 4 est une coupe similaire d'un second mode de réalisation d'une roue correspondant à l'invention ;
- la figure 5 est une coupe similaire d'un troisième mode de réalisation d'une roue correspondant à l'invention ;
- la figure 6 est un graphe présentant les résultats de fatigue obtenus.

La figure 1 présente une coupe d'une roue 1 en tôle classique, conforme aux recommandations ETRTO.

Cette roue 1 pour véhicule utilitaire, en tôle d'acier et en une seule pièce, est composée d'un disque 2, d'une jante 3 et d'une valve 5. La jante comprend une gorge centrale de montage 31, deux sièges de bourrelet, côté disque 32 et côté opposé 33, et deux rebords 34. La gorge 31 est reliée au siège 33 du côté opposé au disque 2 par un flanc 37 et, du côté du disque 2 par un flanc 36 suivi par une zone de liaison 39 entre la jante 3 et le disque 2. Cette liaison est réalisée par soudure de l'extrémité du disque 2 sur la paroi radialement intérieure de la zone de liaison 39. Le trou de valve 38 est situé dans le flanc de gorge 36 du côté du disque 2. En conséquence, la tige de valve 53 se situe à l'intérieur du disque 2 de la roue et traverse le disque 2 par l'ajour 22.

Sur cette figure apparaît aussi le contour extérieur des organes de freinage 6 du véhicule. On constate que la cavité 7 entre la jante 3, le disque 2 et les organes de freinage 6 est relativement réduite, ce qui montre la vulnérabilité de la valve 5 lorsque des objets tels des pierres pénètrent à l'intérieur.

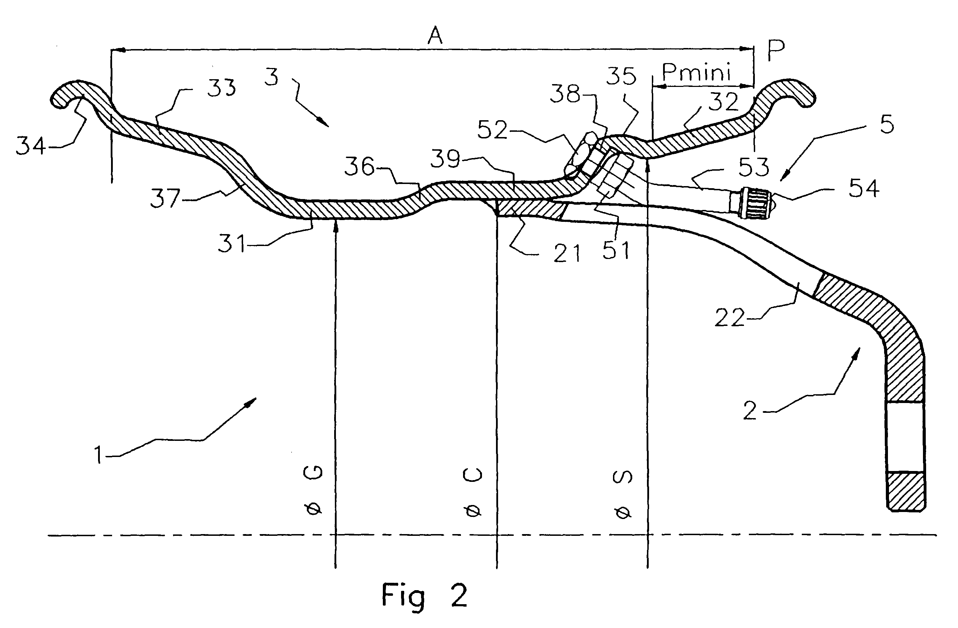

La figure 2 présente une coupe de roue avec un trou de valve 38 situé entre le siège côté disque 32 et la zone de liaison disque/jante 39. La valve de cette roue ne peut plus être détériorée par des objets s'introduisant dans la cavité 7. En revanche, la résistance à la fatigue de cette roue est notoirement insuffisante.

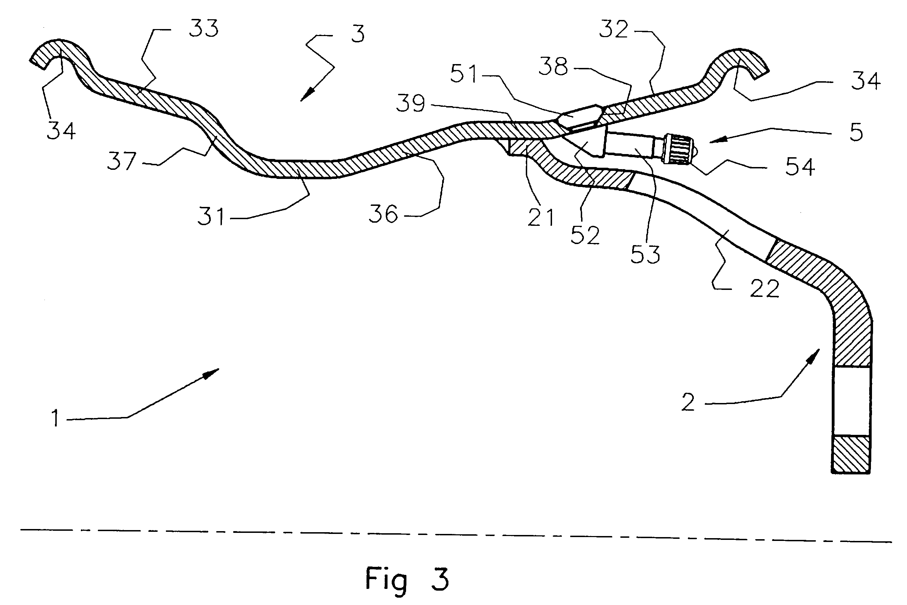

Les figures 3, 4 et 5 présentent des coupes de roues similaires à la roue précédente, mais correspondant à l'invention.

Soient :

- $\Phi_g$ le diamètre de la surface radialement intérieure de la gorge de montage 31,
- $\Phi_c$ le diamètre de la surface radialement intérieure de la zone de liaison disque/jante 39, diamètre pris axialement à l'extrémité du disque de roue 2, et
- $\Phi_s$ le diamètre de la surface radialement intérieure du siège de bourrelet côté disque 32, diamètre pris axialement à une distance $P_{min}$ du plan de référence P de ce côté de la roue 1. Le plan de référence P est défini, de chaque côté de la jante 3, par les recommandations ETRTO, et la distance entre ces deux plans, de part et d'autre de la gorge de montage correspond à la largeur A de la roue 1, par exemple ici : 9.00 pouces (228,6 mm) (voir figure 2). De même la distance $P_{min}$ est aussi identifiée par ces recommandations. Cette distance correspond à la largeur axiale des sièges prévus pour les bourrelets des pneumatiques. Cette largeur est fonction du type de jante considérée ainsi que de sa largeur et de son diamètre.

La demanderesse s'est aperçue, de façon tout à fait surprenante, que la valeur du rapport

$$R = \frac{\Phi_c - \Phi_g}{\Phi_s - \Phi_g}$$

était critique pour la résistance à la fatigue des roues à valve déportée relativement au disque 2 telles que présentées aux figures 2 à 5.

Le tableau suivant montre les valeurs des paramètres $\Phi_g$, $\Phi_s$, $\Phi_c$ et R pour un ensemble de roues testées ainsi que leur durée de vie dans un test de fatigue.

Le test de fatigue consiste à faire rouler un ensemble roue/pneumatique sur un volant en roulage droit, à faible vitesse (de l'ordre de 40 km/heure) mais sous de fortes surcharges et à enregistrer, pour chaque valeur de charge appliquée, la durée de vie (en nombre de cycles) de la roue.

Les résultats sont exprimés par un graphe avec $\log_{10}N$ en abscisse, N étant le nombre de cycles, et en ordonnée Q, charge appliquée. Une droite de référence Δ sépare le graphe en deux domaines I et II. Lorsque les valeurs de durée de vie sont situées à droite de cette droite, c'est-à-dire dans la zone I, la résistance à la fatigue de la roue 1 est considérée comme acceptable. Pour une charge donnée, la limite d'acceptabilité est donnée par une valeur correspondante de nombre de cycles.

| Roue | Dimensions (pouces/ mm) | $\Phi_s$ (mm) | $\Phi_c$ (mm) | $\Phi_g$ (mm) | R | DDV ($10^6$ cycles) | DDV normée |
|---|---|---|---|---|---|---|---|
| A | 17,5 x 6,00 (444,5 x 152,4) | 421 | 390 | 382 | 0,21 | 0,3 | 60 |
| B | 22,5 x 9,00 (571,5 x 228,6) | 538,4 | 510 | 496 | 0,33 | 0,3 | 60 |
| C | 22,5 x 9,00 (571,5 x 228,6) | 538,4 | 527,7 | 496 | 0,75 | 0,97 | 194 |
| D | 17,5 x 6,00 (444,5 x 152,4) | 421 | 408,4 | 382 | 0,68 | 0,56 | 112 |
| E | 22,5 x 9,00 (571,5 x 228,6) | 538,4 | 538,4 | 496 | 1.00 | 1,90 | 380 |

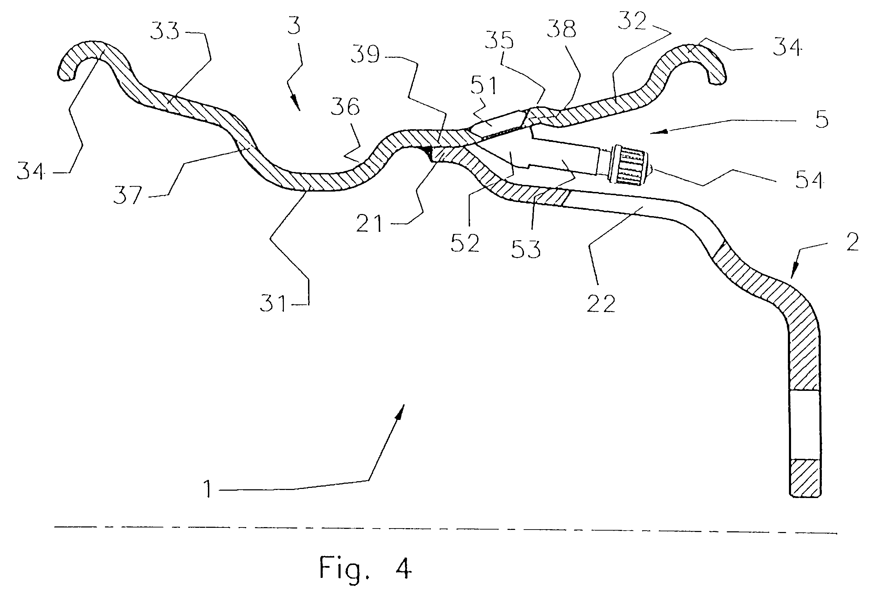

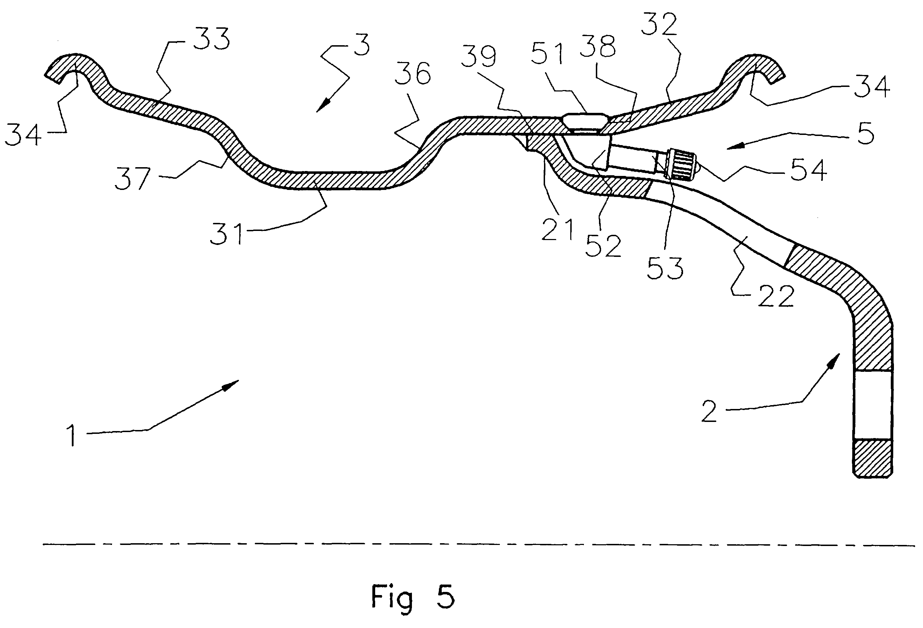

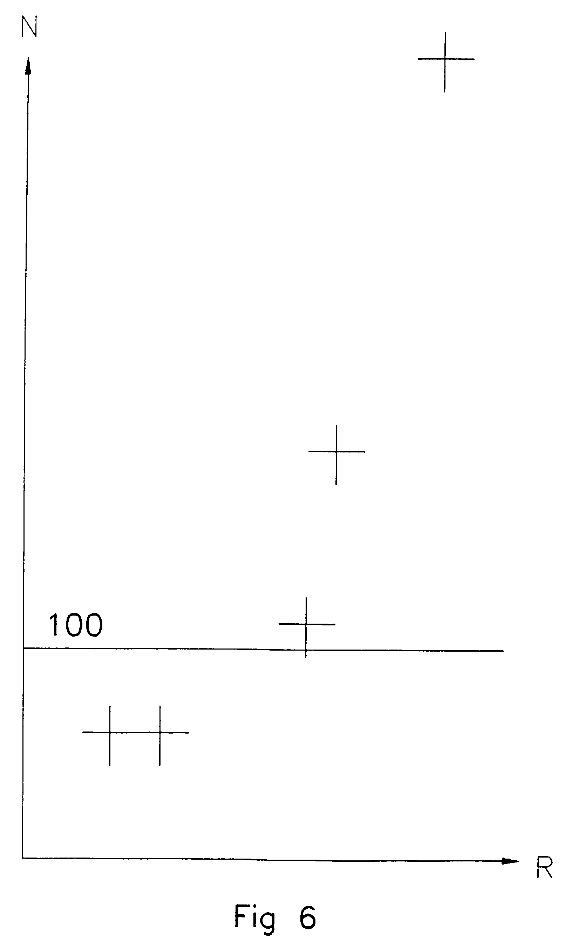

Les cinq roues testées sont de dimensions 17,5 x 6,00 pouces (roues A et D) ou 22,5 x 9,00 pouces (roues B, C et E). Les roues A et B correspondent au profil de la figure 2, la roue C au profil de la figure 3, la roue D au profil de la figure 4 et la roue E au profil de la figure 5. Leurs rapports R vont de 0,21 à 1,00 et la figure 6 montre que la durée de vie moyenne obtenue pour ces roues varie de façon très marquée en fonction de ce rapport R.

La durée de vie normée consiste à prendre pour base 100, la valeur de la durée de vie minimale pour que la roue soit considérée acceptable à la charge appliquée lors du test de fatigue. Ici, la base 100 correspond à 0,5 $10^6$ cycles.

Les roues C, D et E de rapports R égaux à 0,75, 0,68 et 1,00 ont une durée de vie satisfaisante. Les roues A et B ont une résistance à la fatigue très insuffisante et des rapports R égaux à 0,21 et 0,33.

Le graphe 6 présente les résultats des tests de fatigue pour les roues présentées avec en abscisse le rapport R et en ordonnée la valeur de durée de vie normée. Ce graphe 6 nous montre qu'une valeur de R de 0,65 est une valeur minimale pour obtenir une résistance à la fatigue satisfaisante.

Bien entendu, la valeur de ce rapport n'est pas du tout le seul paramètre influant sur la résistance à la fatigue, l'épaisseur des tôles du disque 2 et de la jante 3, la présence et la géométrie des ajours 22 du disque 2, la géométrie du disque 2... tous ces facteurs sont aussi très importants. Mais, après avoir optimisé ces divers facteurs, pour obtenir un résultat satisfaisant en durée de vie tout en gardant un poids total acceptable, il est nécessaire d'optimiser le profil de la roue de telle sorte que le rapport R soit supérieur à 0, 65 et de préférence supérieur à 0,75.

Le rapport R indique qu'il est très important de conserver une différence de hauteur radiale entre la gorge de montage et la zone de liaison jante/disque la plus élevée possible. Bien entendu, il est même souhaitable de conserver la zone de liaison jante/disque à la même hauteur radiale que le siège du bourrelet, c'est ce qui a été réalisé pour la roue E, mais cela n'est pas possible pour toutes les largeurs de jante, notamment 6.00 (152,4 mm). Au-delà de 9.00 pouces (228,6 mm), la largeur de la jante est suffisante pour que l'obtention d'un rapport élevé pour R soit plus aisée.

Pour obtenir une valeur acceptable des rapports

$$R = \frac{\Phi_c - \Phi_g}{\Phi_s - \Phi_g},$$

les jantes 3 des figures 3 et 4 ont leur longueur de la zone de liaison jante/disque 39 réduite au minimum et la zone du trou de valve 38 se situe dans le prolongement du siège de bourrelet côté disque 32, sans hump (figure 3) ou avec un léger décalage dû à un petit hump 35 (figure 4). Tout autre dispositif anti-décoincement peut aussi être utilisé. Dans le profil de la figure 3, la zone du trou de valve 38 se situe dans le prolongement du siège de bourrelet 32 côté disque avec le même angle d'inclinaison relativement à l'axe de la roue.

Il est essentiel de ne pas réduire la taille de la gorge de montage 31 pour permettre le montage des pneumatiques.

Dans le cas de la roue présentée à la figure 5, on a réussi à conserver la même hauteur radiale pour la zone de liaison disque jante 39 et le trou de valve 38. Cela permet d'avoir un rapport R égal à 1 et le niveau de durée de vie en fatigue est particulièrement bon. Cela a été obtenu sans réduire la taille de la gorge de montage 31 grâce à l'utilisation d'une valve de dimensions optimisées.

De préférence, tel que présenté aux figures 3, 4 et 5, la valve 5 utilisée a un faible encombrement et présente un écrou 51 au moins partiellement noyé dans l'épaisseur de la jante du côté radialement extérieur de cette jante.

Cela favorise le montage et le démontage des pneumatiques.

Les roues selon l'invention peuvent être réalisées en tôle d'acier ou d'aluminium, notamment.

**Revendications**

1. Roue (1) pour véhicule utilitaire, en tôle et en une seule pièce, comprenant un disque (2), une jante (3) avec une gorge de montage circonférentielle (31) entre deux sièges (32, 33) prévus pour le bourrelet d'un pneumatique et deux rebords (34), la liaison entre ledit disque (2) et ladite jante (3) étant réalisée dans une zone de liaison (39) disposée entre le flanc (36) de la gorge (31) et l'extrémité du siège (32) situés axialement du côté du disque (2), et une valve (5) traversant ladite jante (3) par un trou de valve (38), ledit trou de valve (38) étant situé axialement entre ladite zone de liaison (39) et ladite extrémité du siège (32) situé du côté du disque (2), et où, $\Phi_g$ étant le diamètre de la surface radialement intérieure de la gorge de montage (31), $\Phi_c$ étant le diamètre de la surface radialement intérieure de la zone de liaison (39), diamètre pris axialement à l'extrémité du disque (2) de roue (1), et $\Phi_s$ étant le diamètre de la surface radialement intérieure des sièges de bourrelet (32,33), diamètre pris axialement à une distance $P_{min}$ des plans de référence P de la largeur de ladite jante (3), lesdits plans P étant deux plans perpendiculaires à l'axe de la roue passant chacun par l'intersection entre les prolongements, du côté radialement extérieur de la jante, d'un siège de bourrelet (32, 33) et du rebord (34) adjacent, la distance axiale entre lesdits deux plans P correspondant à la largeur de ladite jante (3) et la distance $P_{min}$ étant la largeur axiale desdits sièges de bourrelets (32, 33) de ladite jante (3), le rapport

$$R = \frac{\Phi_c - \Phi_g}{\Phi_s - \Phi_g}$$

   est supérieur ou égal à 0,65.

2. Roue (1) selon la revendication 1, telle que le rapport

$$R = \frac{\Phi_c - \Phi_g}{\Phi_s - \Phi_g}$$

   est supérieur ou égal à 0, 75.

3. Roue selon l'une des revendications 1 ou 2, telle que la zone de liaison (39) entre le disque (2) et la jante (3) est une zone cylindrique.

4. Roue selon l'une des revendications 1 à 3, telle que l'écrou (51) de fixation de la valve (5) est au moins partiellement noyé dans l'épaisseur de la jante (3) du côté radialement extérieur de ladite jante (3).

5. Roue selon l'une des revendications 1 à 4, telle que la zone du trou de valve (38) se situe dans le prolongement du siège de bourrelet (32) côté disque (2) avec le même angle d'inclinaison relativement à l'axe de la roue.

6. Roue selon l'une des revendications 1 à 4, telle que la zone du trou de valve (38) se situe dans le prolongement de la zone de liaison disque/jante (39), du côté du disque (2), à la même hauteur radiale.

7. Roue selon l'une des revendications 1 à 6, telle que la zone du trou de valve (38) est raccordée au siège de bourrelet (32) côté disque (2) par un dispositif anti-décoincement tel un hump (35).

8. Roue selon l'une des revendications 1 à 7, telle que la largeur de ladite roue (1) est comprise entre 6.00 (152,4 mm) et 9.00 pouces (228,6 mm).

**Patentansprüche**

1.  Rad (1) für Nutzfahrzeuge, das aus Blech hergestellt und einstückig ist und eine Radschüssel (2), eine Felge (3) mit einem in Umfangsrichtung verlaufenden Tiefbett (31) zwischen zwei Wulstsitzen (32, 33) und zwei Felgenhörnern (34), wobei die Verbindung zwischen der Radschüssel (2) und der Felge (3) in einer Verbindungszone (39) vorgesehen ist, die zwischen der Seitenwand (36) des Tiefbetts (31) und dem Ende des Wulstsitzes (32), die in Axialrichtung zur Radschüssel (2) hin liegen, angeordnet ist, sowie ein Ventil (5) aufweist, das durch ein Ventilloch (38) durch die Felge (3) hindurchgeht, wobei sich das Ventilloch (38) in Axialrichtung zwischen der Verbindungszone (39) und dem zur Radschüssel (2) hin liegenden Ende des Wulstsitzes (32) befindet, und wobei, wenn $\phi_g$ den Durchmesser der radial innenliegenden Oberfläche des Tiefbetts (31), $\phi_c$ den Durchmesser der radial innenliegenden Oberfläche der Verbindungszone (39), der in Axialrichtung am Ende der Radschüssel (2) des Rades (1) gemessen ist, und $\phi_s$ den Durchmesser der radial innenliegenden Oberfläche der Wulstsitze (32, 33), der in Axialrichtung in einem Abstand $P_{min}$ von den Referenzebenen P der Breite der Felge (3) gemessen ist, bedeuten, wobei die Referenzebenen P zwei Ebenen sind, die senkrecht zur Radachse liegen und jeweils auf der radial außenliegenden Seite der Felge durch den Schnittpunkt zwischen der Verlängerung des Wulstsitzes (32, 33) und dem benachbarten Felgenhorn (34) hindurchgehen, wobei der axiale Abstand zwischen den Referenzebenen P der Breite der Felge (3) entspricht und der Abtand $P_{min}$ die axiale Breite der Wulstsitze (32, 33) der Felge (3) darstellt,
    das Verhältnis

$$R = \frac{\phi_c - \phi_g}{\phi_s - \phi_g}$$

mindestens gleich 0,65 ist.

2.  Rad nach Anspruch 1, das so ausgebildet ist, daß das Verhältnis

$$R = \frac{\phi_c - \phi_g}{\phi_s - \phi_g}$$

mindestens gleich 0,75 ist.

3.  Rad nach Anspruch 1 oder 2, das so ausgebildet ist, daß die Verbindungszone (39) der Verbindung zwischen der Radschüssel (2) und der Felge (3) eine zylindrische Zone ist.

4.  Rad nach einem der Ansprüche 1 bis 3, das so ausgebildet ist, daß die Mutter (51) zur Befestigung des Ventils (5) mindestens teilweise in Dickenrichtung in die Felge (3) eingesenkt ist.

5.  Rad nach einem der Ansprüche 1 bis 4, das so ausgebildet ist, daß sich der Bereich des Ventillochs (38) in der Verlängerung des auf der Seite der Radschüssel (2) liegenden Wulstsitzes (32) mit dem gleichen Neigungswinkel relativ zur Radachse befindet.

6.  Rad nach einem der Ansprüche 1 bis 4, das so ausgebildet ist, daß sich der Bereich des Ventillochs (38) in der Verlängerung der Verbindungszone (39) der Verbindung zwischen Radschüssel und Felge auf der Seite der Radschüssel (2) auf der gleichen radialen Höhe befindet.

7.  Rad nach einem der Ansprüche 1 bis 6, das so ausgebildet ist, daß der Bereich des Ventillochs (38) über eine Einrichtung zur Verhinderung des Abrutschens des Wulstes, wie einen Hump (35), mit dem auf der Seite der Radschüssel (2) liegenden Wulstsitz (32) verbunden ist.

8.  Rad nach einem der Ansprüche 1 bis 7, das so ausgebildet ist, daß die Breite des Rades (1) im Bereich von 6.00 Zoll (152,4 mm) bis 9.00 Zoll (228,6 mm) liegt.

**Claims**

1. A wheel (1) for a commercial vehicle, made of sheet metal and of a single piece, comprising a disc (2), a rim (3) with a circumferential mounting groove (31) between two seats (32, 33) provided for the bead of a tyre and two flanges (34), the connection between said disc (2) and said rim (3) being effected in a connection zone (39) located between the flank (36) of the groove (31) and the end of the seat (32) which are located axially to the side of the disc (2), and a valve (5) passing through said rim (3) through a valve hole (38), said valve hole (38) being located axially between said connection zone (39) and said end of the seat (32) located on the side of the disc (2), and in which, $\Phi_g$ being the diameter of the radially inner surface of the mounting groove (31), $\Phi_c$ being the diameter of the radially inner surface of the connection zone (39), which diameter is taken axially to the end of the disc (2) of the wheel (1), and $\Phi_s$ being the diameter of the radially inner surface of the bead seats (32, 33), which diameter is taken axially at a distance $P_{min}$ from the reference planes P of the width of said rim (3), said planes P being two planes perpendicular to the axis of the wheel each passing through the intersection between the prolongations, on the radially outer side of the rim, of a bead seat (32, 33) and of the adjacent flange (34), the axial distance between said two planes P corresponding to the width of said rim (3) and the distance $P_{min}$ being the axial width of said bead seats (32, 33) from said rim, the ratio

$$R = \frac{\Phi_c - \Phi_g}{\Phi_s - \Phi_g}$$

being greater than or equal to 0.65.

2. A wheel (1) according to Claim 1, such that the ratio

$$R = \frac{\Phi_c - \Phi_g}{\Phi_s - \Phi_g}$$

is greater than or equal to 0.75.

3. A wheel according to one of Claims 1 or 2, such that the connection zone (39) between the disc (2) and the rim (3) is a cylindrical zone.

4. A wheel according to one of Claims 1 to 3, such that the nut (51) for fixing the valve (5) is at least partially embedded in the thickness of the rim (3) on the radially outer side of this rim (3).

5. A wheel according to one of Claims 1 to 4, such that the zone of the valve hole (38) is located in the prolongation of the bead seat (32) on the disc (2) side with the same angle of inclination relative to the axis of the wheel.

6. A wheel according to one of Claims 1 to 4, such that the zone of the valve hole (38) is located in the prolongation of the disc/rim connection zone (39) on the disc (2) side, at the same radial height.

7. A wheel according to one of Claims 1 to 6, such that the zone of the valve hole (38) is connected to the bead seat (32) on the disc (2) side by an anti-unwedging device, such as a hump (35).

8. A wheel according to one of Claims 1 to 7, such that the width of said wheel (1) is between 6.00 (152.4 mm) and 9.00 inches (228.6 mm).

Fig. 1

Fig 2

EP 0 755 807 B1

Fig 3

Fig. 4

Fig 5

EP 0 755 807 B1

Fig 6